# EUROPEAN PATENT APPLICATION

(11) **EP 3 219 605 A1**
(43) Date of publication of application: **20.09.2017**
(21) Application number: 17161241.9
(22) Date of filing: 16.03.2017
(51) Int. Cl.: B64C 7/00, B64D 13/06

(54) **TANDEM AIR CYCLE MACHINE MODULE FOR ENVIRONMENTAL CONTROL SYSTEMS**

(30) Priority: 16.03.2016 US 201662309080 P
(71) Applicant: Hamilton Sundstrand Corporation, Windsor Locks, CT 06096-1010 (US)
(72) Inventor: ARMY, Donald E., Enfield, CT Connecticut 06082 (US); PEACOS III, Frederick, North Scituate, RI Rhode Island 02857 (US)
(74) Representative: Hughes, Andrea Michelle

(57) **Abstract**

Tandem air cycle machine modules include a first air cycle machine (318a) having a first compressor (324a) and a first turbine (326a), a second air cycle machine (318b) having a second compressor (324b) and a second turbine (326b), and a structural manifold (430) operably connected to both the first air cycle machine and the second air cycle machine.

## Description

### CROSS-REFERENCE TO RELATED APPLICATIONS

The present application claims priority from U.S. Provisional Patent Application Numbers 62/309,076, 62/309,080, 62/309,081, and 62/309,084, filed on March 16, 2016.

### BACKGROUND

The subject matter disclosed herein generally relates to environmental control systems and, more particularly, to air cycle machines of environmental control systems.

Commercial aircraft are conventionally equipped with two-pack environmental control system architectures that include redundant packs installed in separate bays beneath a center wing box of the aircraft and are encapsulated by the aircraft wing-to-body fairing. These bays are commonly separated by a Keel Beam that supports the weight of the aircraft in the event of a wheels-up landing. Local penetrations of the keel beam can be accommodated if properly reinforced.

Smaller configurations of environmental control system architectures can include pack-and-a-half architectures that fit within a single volume. However, such volume is larger than half of the conventional two-pack architectures, and thus the pack-and-a-half architecture systems may be too large for use in such locations, and thus may be required to be installed in other locations of the aircraft (e.g., in a tail cone of the aircraft). It may be beneficial to further reduce the size of pack-and-a-half environmental control system architectures.

### SUMMARY

According to one embodiment, a tandem air cycle machine module is provided. The tandem air cycle machine module includes a first air cycle machine having a first compressor and a first turbine, a second air cycle machine having a second compressor and a second turbine, and a structural manifold operably connected to both the first air cycle machine and the second air cycle machine.

In addition to one or more of the features described herein, or as an alternative, further embodiments of the tandem air cycle machine module may include an isolation valve within the structural manifold and configured to control an airflow into the first turbine and the second turbine.

In addition to one or more of the features described herein, or as an alternative, further embodiments of the tandem air cycle machine module may include that the isolation valve comprises an actuator and a gate, the actuator configured to control and move the gate to selectively block flow into the first turbine or the second turbine.

In addition to one or more of the features described herein, or as an alternative, further embodiments of the tandem air cycle machine module may include that the isolation valve further comprises a cover that fixedly connects to the structural manifold, the gate movably mounted to the cover.

In addition to one or more of the features described herein, or as an alternative, further embodiments of the tandem air cycle machine module may include that the isolation valve is operable into (i) a first position wherein airflow can enter both the first turbine and the second turbine, (ii) a second position wherein airflow can enter only the first turbine and is prevented from entering the second turbine, and (iii) a third position wherein airflow can enter only the second turbine and is prevented from entering the first turbine.

In addition to one or more of the features described herein, or as an alternative, further embodiments of the tandem air cycle machine module may include that the structural manifold includes a manifold inlet configured to receive an airflow from a water collector of an environmental control system of an aircraft.

In addition to one or more of the features described herein, or as an alternative, further embodiments of the tandem air cycle machine module may include at least one mounting pad on the structural manifold, the at least one mounting pad configured to mount the structural manifold to a structure of an aircraft.

In addition to one or more of the features described herein, or as an alternative, further embodiments of the tandem air cycle machine module may include at least one vibration isolator configured to limit transmission of vibration to or from the tandem air cycle machine.

In addition to one or more of the features described herein, or as an alternative, further embodiments of the tandem air cycle machine module may include a plurality of securing mechanisms that connect and secure attachment of the first and second air cycle machines to the structural manifold.

According to another embodiment, an environmental control system of an aircraft is provided. The environmental control system includes a tandem air cycle machine module having a first air cycle machine having a first compressor and a first turbine, a second air cycle machine having a second compressor and a second turbine, and a structural manifold operably connected to both the first air cycle machine and the second air cycle machine.

In addition to one or more of the features described herein, or as an alternative, further embodiments of the environmental control system may include an isolation valve within the structural manifold and configured to control an airflow into the first turbine and the second turbine.

In addition to one or more of the features described herein, or as an alternative, further embodiments of the environmental control system may include that the isolation valve comprises an actuator and a gate, the actuator configured to control and move the gate to selectively block flow into the first turbine or the second turbine.

In addition to one or more of the features described herein, or as an alternative, further embodiments of the environmental control system may include that the isolation valve further comprises a cover that fixedly connects to the structural manifold, the gate movably mounted to the cover.

In addition to one or more of the features described herein, or as an alternative, further embodiments of the environmental control system may include that the isolation valve is operable into (i) a first position wherein airflow can enter both the first turbine and the second turbine, (ii) a second position wherein airflow can enter only the first turbine and is prevented from entering the second turbine, and (iii) a third position wherein airflow can enter only the second turbine and is prevented from entering the first turbine.

In addition to one or more of the features described herein, or as an alternative, further embodiments of the environmental control system may include that the structural manifold includes a manifold inlet configured to receive an airflow from a water collector of an environmental control system of an aircraft.

In addition to one or more of the features described herein, or as an alternative, further embodiments of the environmental control system may include at least one mounting pad on the structural manifold, the at least one mounting pad configured to mount the structural manifold to a structure of an aircraft.

In addition to one or more of the features described herein, or as an alternative, further embodiments of the environmental control system may include at least one vibration isolator configured to limit transmission of vibration to or from the tandem air cycle machine.

In addition to one or more of the features described herein, or as an alternative, further embodiments of the environmental control system may include a plurality of securing mechanisms that connect and secure attachment of the first and second air cycle machines to the structural manifold.

In addition to one or more of the features described herein, or as an alternative, further embodiments of the environmental control system may include a water collector configured to supply conditioned air to the structural manifold.

In addition to one or more of the features described herein, or as an alternative, further embodiments of the environmental control system may include a ram module, the ram module configured to receive air from at least one of the first compressor and the second compressor.

Technical effects of embodiments of the present disclosure include tandem air cycle machine modules for environmental control system architectures that include two or more air cycle machines operably coupled to a single central structural manifold. Further technical effects include air cycle machine isolation valves configured to control flow into and through tandem air cycle machine modules of the present disclosure.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1A is a schematic illustration of an aircraft that can incorporate various embodiments of the present disclosure;
FIG. 1B is a schematic illustration of a bay section of the aircraft of FIG. 1A;
FIG. 2A is a schematic, perspective illustration of an environmental control system of an aircraft that can incorporate embodiments of the present disclosure;
FIG. 2B is a second perspective illustration of the environmental control system of FIG. 2A;
FIG. 3 is a schematic diagram of an environmental control system in accordance with an embodiment of the present disclosure;
FIG. 4A is a schematic illustration of a tandem air cycle machine module in accordance with an embodiment of the present disclosure as assembled;
FIG. 4B is a partially exploded illustration of the tandem air cycle machine module of FIG. 4A;
FIG. 5A is an isometric exploded schematic illustration of a structural manifold in accordance with an embodiment of the present disclosure;
FIG. 5B is an alternative view isometric exploded schematic illustration of the structural manifold of FIG. 5A;
FIG. 6A is a schematic illustration of an isolation valve in accordance with an embodiment of the present disclosure in a first position;
FIG. 6B is a schematic illustration of the isolation valve of FIG. 6A in a second position;
FIG. 6C is a schematic illustration of the isolation valve of FIG. 6A in a third position; and
FIG. 7 is a cross-sectional illustration of a structural manifold in accordance with an embodiment of the present disclosure.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "##" that is shown in FIG. X may be labeled "X##" and a similar feature in FIG. Z may be labeled "Z##." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

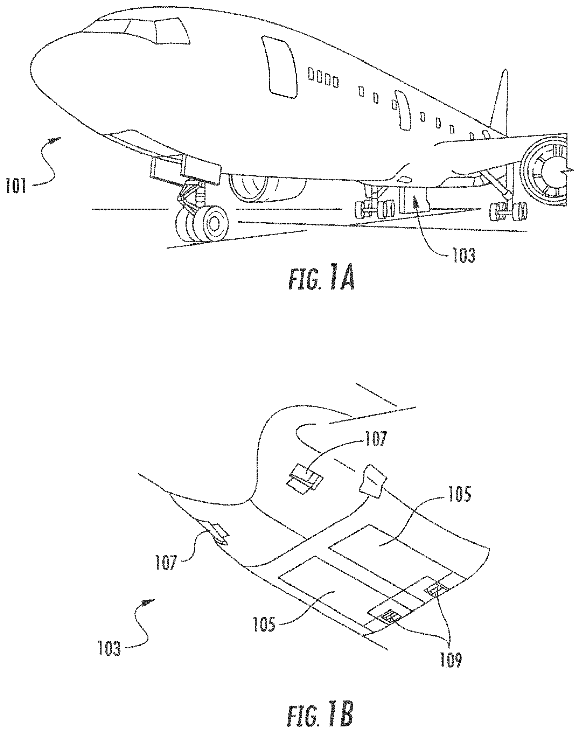

As shown in FIGS. 1A-1B, an aircraft 101 can include one or more bays 103 beneath a center wing box. The bay 103 can contain and/or support one or more components of the aircraft 101. For example, in some configurations, the aircraft 101 can include environmental control systems within the bay 103. As shown in FIG. 1B, the bay 103 includes bay doors 105 that enable installation and access to one or more components (e.g., environmental control systems). During operation of environmental control systems, air that is external to the aircraft 101 can flow into one or more environmental control systems within the bay doors 105 through one or more ram air inlets 107. The air may then flow through the environmental control systems to be processed and supplied to various components or locations within the aircraft 101 (e.g., passenger cabin, etc.). Some air may be exhaust through one or more ram air exhaust outlets 109.

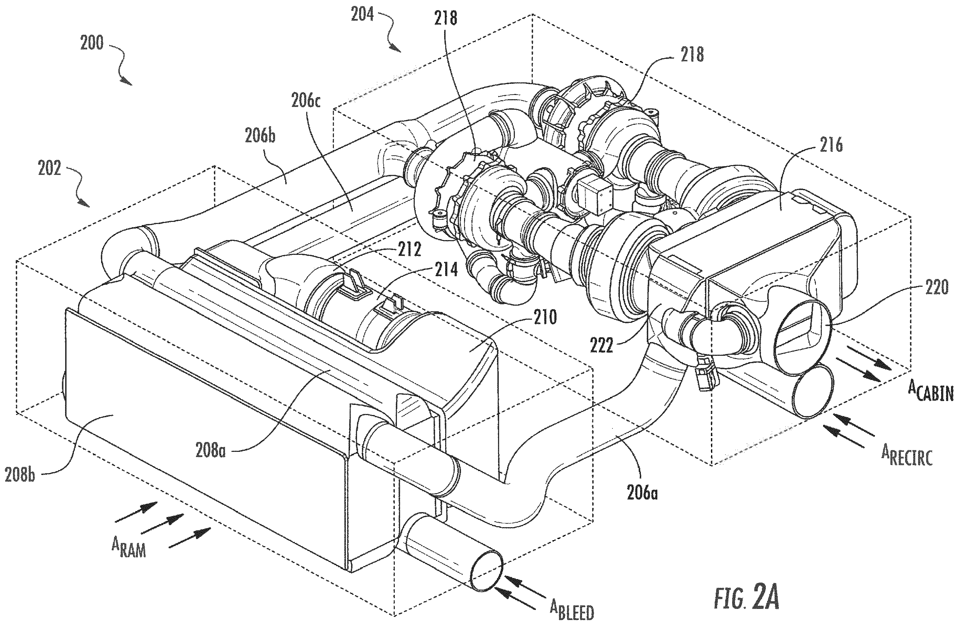

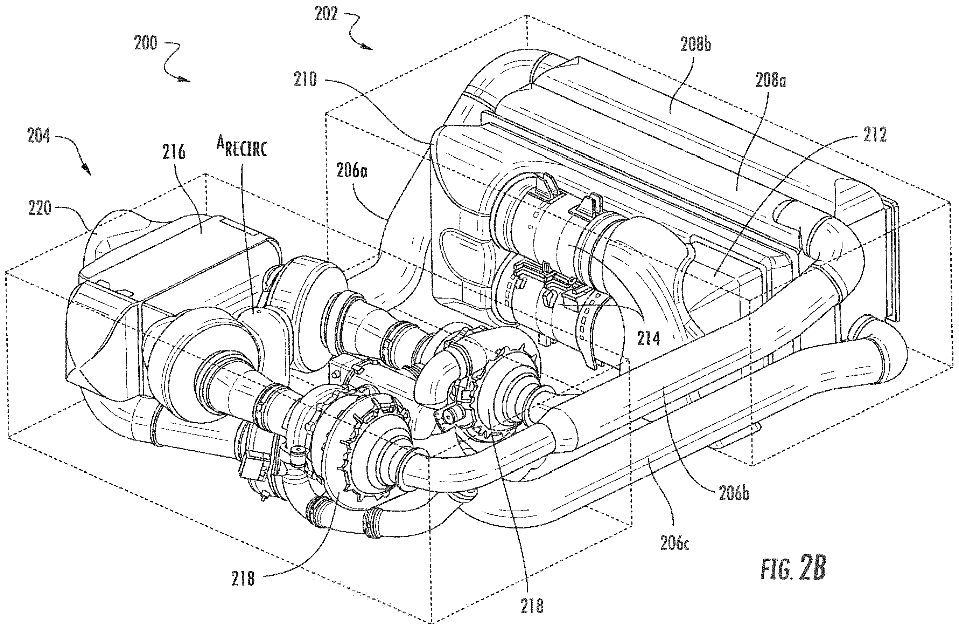

Turning now to FIGS. 2A-2B, an environmental control system 200 in accordance with an embodiment of the present disclosure is shown. The environmental control system 200 includes a ram module 202 and a refrigeration module 204 that are operably connected by one or more ducts 206a, 206b, 206c. FIG. 2A shows a first perspective illustration of the environmental control system 200 and FIG. 2B shows a second perspective illustration of the environmental control system 200. The environmental control system 200 of FIGS. 2A-2B is merely for illustrative and explanatory purposes, and those of skill in the art will appreciate that various embodiments of the present disclosure can be configured with different types of environmental control systems and/or different configurations of environmental control systems, and thus, the present discussion and associated illustrations are not intended to be limiting.

As shown, in FIGS. 2A-2B, the ram module 202 includes a primary heat exchanger 208a and a secondary heat exchanger 208b. The heat exchangers 208a, 208b are configured to receive ram air Aᵣₐₘ and bleed air A_{bleed} to condition air within the ram module 202. The ram module 202 further includes a ram outlet header 210 and a ram exhaust header 212. Located between the headers 210, 212 may be one or more ram fans 214. Air from the ram module 202 can be conveyed to or from the refrigeration module 204 through the ducts 206a, 206b, 206c.

The refrigeration module 204 includes a condenser heat exchanger 216 and one or more air cycle machines 218. The condenser heat exchanger 216 can be operably connected to the secondary heat exchanger 208b by a first duct 206a that can supply hot air to the condenser heat exchanger 216. The air cycle machines 218 can be connected to one or both of the heat exchangers 208a, 208b, as shown. Recirculated air A_{recirc} can be supplied to and mixed with turbine outlet air from the air cycle machines 218 as indicated in FIG. 2A.

The condenser heat exchanger 216 is configured to condition air and supply relatively cool or cold air A_{cabin} to a cabin of an aircraft. Thus, the condenser heat exchanger 216 includes an outlet header 220. The hot air that is supplied to the condenser heat exchanger 216 through the duct 206a is fed into an inlet header 222 of the condenser heat exchanger 216.

As shown in FIGS. 2A-2B, the ram fans 214 and the air cycle machines 218 are separated. Such a configuration enables the separation of the environmental control system 200 to be separated into the ram module 202 and the refrigeration module 204. As shown, the ram module 202 includes the ram fans 214. In some embodiments, the ram fans 214 can be configured as dual electric ram fans that can provide a required ram cooling performance and redundancy. The ram fans 214 can be operated separately or at the same time to enable control and variance in ram flow. Fixed speed fans, two speed fans, or variable speed fans can be used without departing from the scope of the present disclosure. Accordingly, the environmental control system 200 can be installed into two separate volumes on an aircraft (e.g., in two separate bays) as compared to a single large volume.

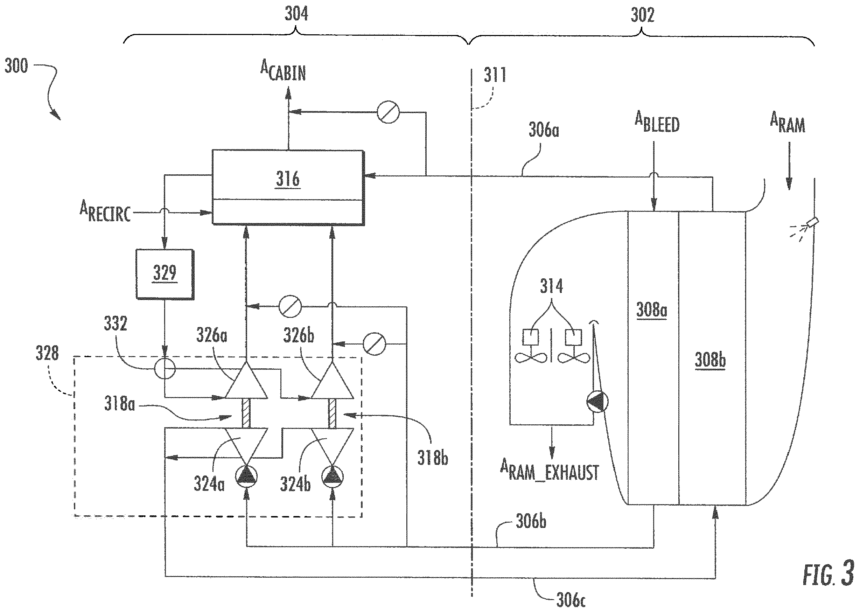

For example, turning now to FIG. 3, a schematic diagram of an environmental control system 300 in accordance with an embodiment of the present disclosure is shown. The environmental control system 300 may be similar to that shown and described in FIGS. 2A-2B, and thus like features will not be described again.

The environmental control system 300 includes a ram module 302 and a refrigeration module 304. In some configurations, when installed on an aircraft, the ram module 302 can be installed into a right-hand side of the aircraft, and thus through a first bay door and the refrigeration module 304 can be installed into a lefthand side of the aircraft, and through a second bay door. In FIG. 3, an aircraft centerline 311 is indicated as separating the ram module 302 from the refrigeration module 304.

The ram module 302 is operably connected to the refrigeration module 304 by one or more ducts 306a, 306b, 306c. The environmental control system 300 includes a primary heat exchanger 308a and a secondary heat exchanger 308b that receive bleed air A_{bleed} and ram air Aᵣₐₘ, respectively, to condition air within the ram module 302. One or more ram fans 314 are configured to aid in exhausting ram exhaust air A_{ram_exhaust} from the ram module 302.

As shown, the refrigeration module 304 includes a condenser heat exchanger 316 and tandem air cycle machines 318a, 318b. Each of the tandem air cycle machines 318a, 318b includes a respective compressor 324a, 324b and a respective turbine 326a, 326b. The tandem air cycle machines 318a, 318b can form a tandem air cycle machine module 328, as indicated by the dashed-line box in FIG. 3. The tandem air cycle machine module 328 can include two air cycle machines (e.g., 318a, 318b) that are operably connected to a centralized manifold, as described herein, and thus form a compact, unitized assembly. Although shown and described herein with two air cycle machines 318a, 318b, those of skill in the art will appreciate that embodiments of the present disclosure can be applied to two, three, or four wheel tandem air cycle machines. As shown, a water collector 329 is configured to extract moisture from air of the condenser 316 and supply the conditioned air to the air cycle machines 318a, 318b. An air cycle machine isolation valve 332 is schematically shown that is configured to be operated and control fluid flow into one or both of the air cycle machines 318a, 318b.

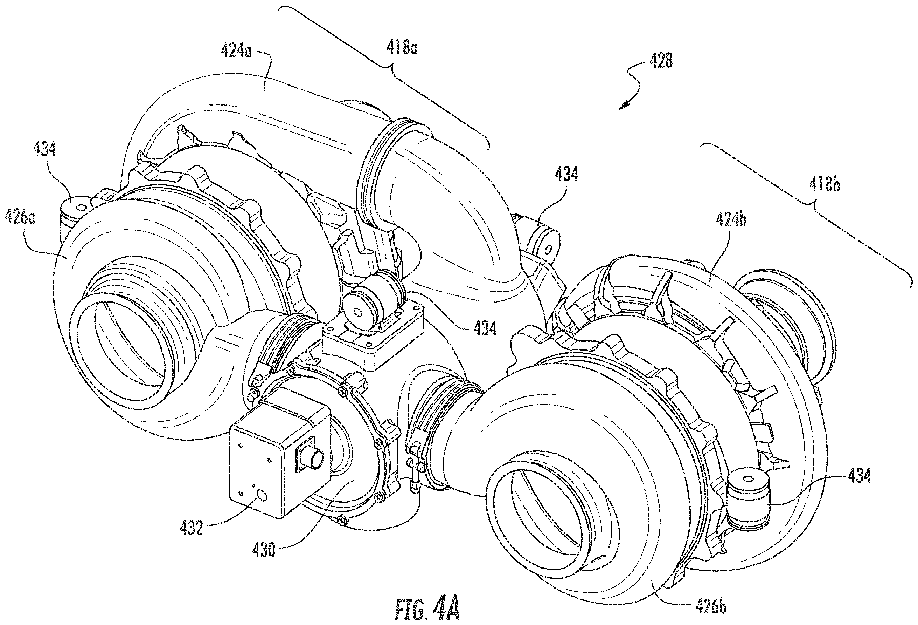

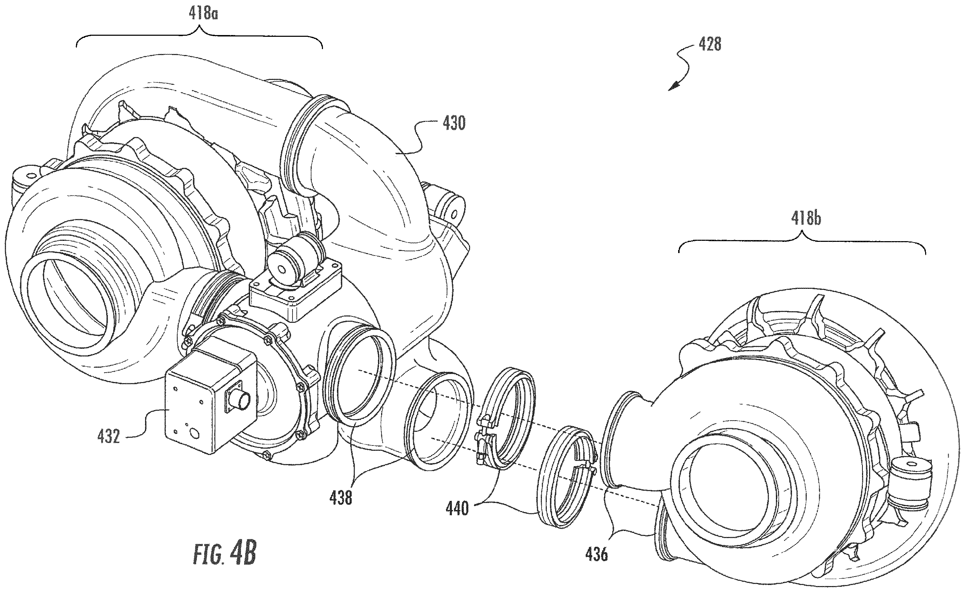

Turning now to FIGS. 4A-4B, schematic illustrations of a tandem air cycle machine module 428 in accordance with an embodiment of the present disclosure are shown. FIG. 4A illustrates the tandem air cycle machine module 428 as assembled and FIG. 4B illustrates the tandem air cycle machine module 428 in a partially exploded view.

As shown in FIGS. 4A, the tandem air cycle machine module 428 includes a first air cycle machine 418a and a second air cycle machine 418b. The air cycle machines 418a, 418b include respective compressors 424a, 424b and respective turbines 426a, 426b. As shown, the first and second air cycle machines 418a, 418b are operably connected by a central structural manifold 430. As described herein, an isolation valve 432 can be configured within the structural manifold 430 and configured to air flow into one or both of the air cycle machines 418a, 418b.

Further, as shown in FIG. 4A, the tandem air cycle machine module 428 includes one or more vibration isolators 434 that are configured to enable mounting of the tandem air cycle machine module 428 to an aircraft and provide vibration protection to the tandem air cycle machine module 428.

As shown in FIG. 4B, the second air cycle machine 418b is shown separated from the structural manifold 430. In the exploded view of FIG. 4B, the connections between the air cycle machine 418b and the structural manifold 430 are shown. The air cycle machine 418b includes two ACM connectors 436 and the structural manifold 430 includes two corresponding manifold connectors 438. The connectors 436, 438 can be fixed by securing mechanisms 440. The securing mechanisms 440 can be C-clamps, D-clamps, flanges, fasteners, or other devices or structures used to secure components together. In some embodiments, the securing mechanisms can be formed as interference fits between the respective connectors 436, 438.

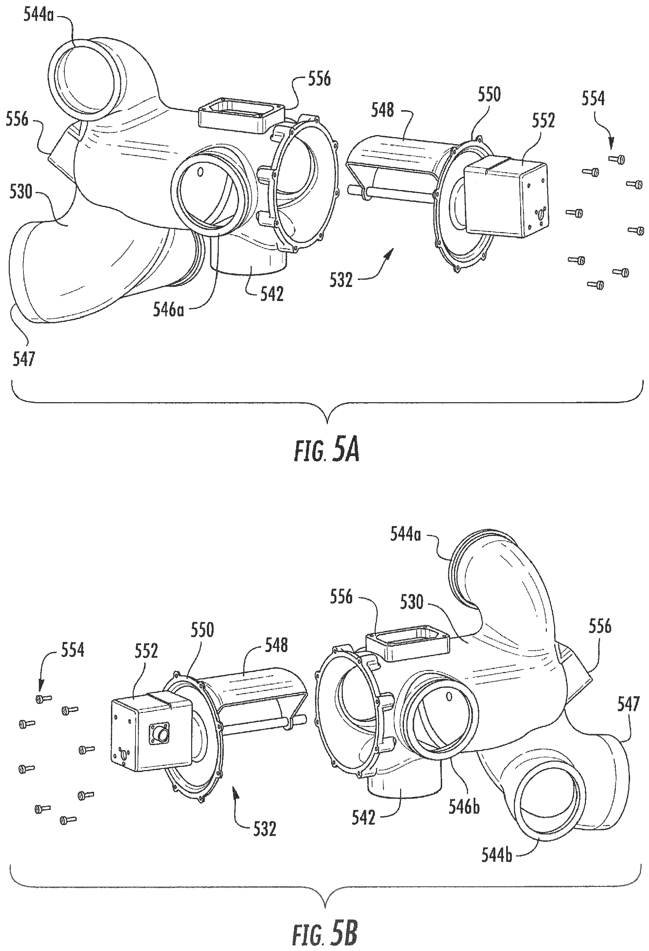

Turning now to FIGS. 5A-5B, exploded view, schematic illustrations of a structural manifold 530 in accordance with an embodiment of the present disclosure are shown. The structural manifold 530 includes an air cycle machine isolation valve 532 that is configured to control airflow from a water collector to one or both of the air cycle machines of a tandem air cycle machine module. Air can enter the structural manifold 530 at a manifold inlet 542. Air within the structural manifold 530 can be directed to a first air cycle machine through a first compressor outlet 544a, a second compressor outlet 544b, a first turbine inlet 546a, a second turbine inlet 546b, or a compressor outlet 547. As will be appreciated by those of skill in the art, the first compressor outlet 544a and the first turbine inlet 546a can fluidly connector to a first air cycle machine and the second compressor outlet 544b and the second turbine inlet 546b can fluidly connector to a second air cycle machine (e.g., as shown and described above).

The isolation valve 532 is configured within the manifold 530 includes a gate 548, a cover 550, an actuator 552, and a fastening mechanism 554. The actuator 552 is mounted to the cover 550 and is configured to control (e.g., rotate, open/close, etc.) the gate 548. The fastening mechanism 554, as shown, comprises multiple fasteners, though those of skill in the art will appreciate that any type of fastening can be used without departing from the scope of the present disclosure. For example, in some embodiments, the fastening mechanism can be achieved by welding, adhesives, interference fits, etc. The gate 548 of the isolation valve 532 is moveable or actuatable to selectively block flow through the turbine inlets 546a, 546b. The gate 548, as shown in the embodiment of FIGS. 5A-5B, is rotatably mounted on the cover 550 and within the manifold 530.

A first position of the gate 548, as controlled by the actuator 552, can be a position such that neither the first turbine inlet 546a nor the second turbine inlet 546b are blocked. That is, in the first position, airflow can flow into both a first turbine and a second turbine of a tandem air cycle machine module. In a second position, the gate 548 moved or positioned to block the second turbine inlet 546b and flow is allowed to flow through the first turbine inlet 546a. In a third position, the gate 548 is moved or positioned to block the first turbine inlet 546a and flow is allowed to flow through the second turbine inlet 546b.

Also shown in FIGS. 5A-5B, the structural manifold 530 can include one or more mounting pads 556. The mounting pads 556 are configured to enable the structural manifold 530 to be mounted to an aircraft or other structure. In some embodiments, the mounting pads 556 can be configured to mount or receive vibration isolators that are then used for mounting to an aircraft or other structure.

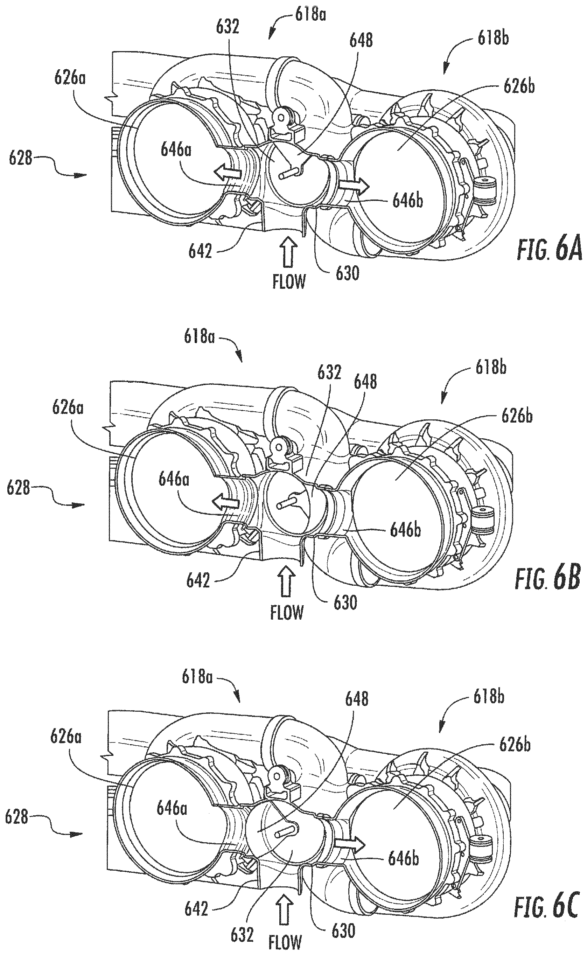

Turning now to FIGS. 6A-6C, first, second, and third positions of an isolation valve 632 in accordance with an embodiment of the present disclosure are shown. FIG. 6A illustrates the isolation valve 632 in the first position, FIG. 6B illustrates the isolation valve 632 in the second position, and FIG. 6C illustrates the isolation valve 632 in the third position. The isolation valve 632 of FIGS. 6A-6C is similar to that shown and described above. That is, the isolation valve 632 is configured within a tandem air cycle machine module 628 between a first air cycle machine 618a and a second air cycle machine 618b. The isolation valve 632 is configured within and part of a structural manifold 630 and is operable to control flow from manifold inlet 642 into and through a first turbine inlet 646a and a second turbine inlet 646b. The first and second turbine inlets 646a, 646b of the manifold 630 are fluid passages into a first turbine 626a and second turbine 626b of respective first air cycle machine 618a and second air cycle machine 618b of the tandem air cycle machine module 628.

As noted, FIG. 6A illustrates the isolation valve 632 in the first position. As shown, a valve gate 648 is configured such that it does not block or otherwise obstruct fluid flow through either of the first turbine inlet 646a or the second turbine inlet 646b. The flow is illustrated by the arrows in FIG. 6A, with flow entering the manifold 630 from the inlet 642 and flowing into both the first turbine 626a and the second turbine 626b.

FIG. 6B, shows the isolation valve 632 in a second position, wherein the gate 648 is configured and positioned to block flow into the second turbine 626b and covers or obstructs the second turbine inlet 646b. As shown in FIG. 6B, the arrows illustrate a fluid flow path, and particular illustrate that air flow is only conveyed into the first turbine 626a through the first turbine inlet 646a.

FIG. 6C, shows the isolation valve 632 in a third position, wherein the gate 648 is configured and positioned to block flow into the first turbine 626a and covers or obstructs the first turbine inlet 646a. As shown in FIG. 6C, the arrows illustrate a fluid flow path, and particular illustrate that air flow is only conveyed into the second turbine 626b through the second turbine inlet 646b.

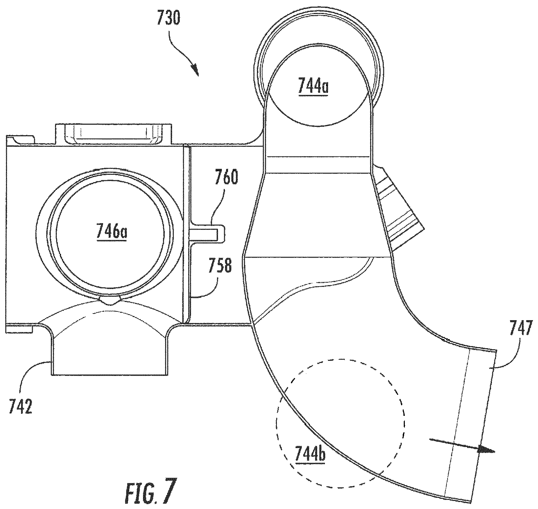

Turning now to FIG. 7, a cross-sectional illustration of a structural manifold 730 of a tandem air cycle machine module in accordance with an embodiment of the present disclosure is shown. The structural manifold 730 may be similar to that shown and described above and includes a manifold inlet 742 that allows fluid flow into the manifold 730. Fluid can then exit the manifold 730 through a first turbine inlet 746a (a second turbine inlet is not shown based on the cross-sectional view). Further, as shown, the structural manifold 730 includes a first compressor outlet 744a and a second compressor inlet 744b through which air can flow through a compressor outlet 747. FIG. 7 also illustrates a bulkhead 758 that can provide structural integrity and/or stability to the manifold 730. Further, as shown, the bulkhead 758 can include a valve support 760 integrally formed therein. The valve support 760 can receive a portion of an isolation valve (e.g., a portion of a gate of the valve).

Advantageously, embodiments described herein provide tandem air cycle machine modules having two air cycle machines and a centralized manifold to form a compact unitized assembly. Various embodiments can be applied to, for example, two, three, or four wheel tandem air cycle machines. In some embodiments, an isolation valve can be integrated into the centralized manifold and control airflow into one or more of the connected air cycle machines. In accordance with some embodiments of the present disclosure, the central, shared manifold can simplify system ducting arrangements by coupling turbine inlet and compressor outlet connections. Furthermore, in some embodiments, a number of mounting points can simplify attachment to aircraft while facilitating the removal and replacement of individual air cycle machines of the tandem air cycle machine module. That is, embodiments provided herein enable a module and separable system wherein various parts or components can be separately removed and/or replaced during maintenance operations. Moreover, in some embodiments, vibration isolators can limit the transmission of structural borne noise to the airframe as well as external loads transmitted to the air cycle machines of the tandem air cycle machine module.

The use of the terms "a," "an," "the," and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," and the like are with reference to normal operational attitude and should not be considered otherwise limiting.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present invention as defined by the claims. Additionally, while various embodiments of the present disclosure have been described, it is to be understood that aspects of the present disclosure may include only some of the described embodiments.

For example, although shown and described with respect to a tandem air cycle machine module having two air cycle machines, various other tandem air cycle machine modules may employ embodiments of the present disclosure. For example, embodiments provided herein can be applied to two, three, or four wheel tandem air cycle machines.

Accordingly, the present disclosure is not to be seen as limited by the foregoing description, but is only limited by the scope of the appended claims.

## Claims

1. A tandem air cycle machine module comprising:
a first air cycle machine (318a) having a first compressor (324a) and a first turbine (326a);
a second air cycle machine (318b) having a second compressor and a second turbine; and
a structural manifold (430) operably connected to both the first air cycle machine and the second air cycle machine.

2. The tandem air cycle machine module of claim 1, further comprising an isolation valve (632) within the structural manifold and configured to control an airflow into the first turbine and the second turbine.

3. The tandem air cycle machine module of claim 2, wherein the isolation valve comprises an actuator and a gate, the actuator configured to control and move the gate to selectively block flow into the first turbine or the second turbine.

4. The tandem air cycle machine module of claim 3, the isolation valve further comprising a cover that fixedly connects to the structural manifold, the gate movably mounted to the cover.

5. The tandem air cycle machine module of any of claims 2-4, wherein the isolation valve is operable into (i) a first position wherein airflow can enter both the first turbine and the second turbine, (ii) a second position wherein airflow can enter only the first turbine and is prevented from entering the second turbine, and (iii) a third position wherein airflow can enter only the second turbine and is prevented from entering the first turbine.

6. The tandem air cycle machine module of any preceding claim, wherein the structural manifold includes a manifold inlet (542) configured to receive an airflow from a water collector (329) of an environmental control system of an aircraft.

7. The tandem air cycle machine module of any preceding claim, further comprising at least one mounting pad (556) on the structural manifold, the at least one mounting pad configured to mount the structural manifold to a structure of an aircraft.

8. The tandem air cycle machine module of any preceding claim, further comprising at least one vibration isolator (434) configured to limit transmission of vibration to or from the tandem air cycle machine.

9. The tandem air cycle machine module of any preceding claim, further comprising a plurality of securing mechanisms (440) that connect and secure attachment of the first and second air cycle machines to the structural manifold.

10. An environmental control system of an aircraft, the environmental control system comprising a tandem air cycle machine module in accordance with any preceding claim.

11. The environmental control system of claim 10, further comprising a water collector (329) configured to supply conditioned air to the structural manifold.

12. The environmental control system of any of claims 10-11, further comprising a ram module (302), the ram module configured to receive air from at least one of the first compressor and the second compressor.
